# EUROPEAN PATENT APPLICATION

(11) **EP 0 546 755 A1**
(43) Date of publication of application: **16.06.1993**
(21) Application number: 92310955.7
(22) Date of filing: 01.12.1992
(51) Int. Cl.: C08G 64/04, C08G 63/64, C08L 69/00, C08L 51/04, C08L 55/02, C08L 33/20, C08L 25/12

(54) **Delustered thermoplastic polycarbonate resin compositions**

(30) Priority: 13.12.1991 JP 351277/91
(71) Applicant: GE PLASTICS JAPAN LIMITED, Chuo-Ku, Tokyo (JP)
(72) Inventor: Morioka, Masataka, Moka-shi, Tochigi-ken 321-43 (JP); Yamaguchi, Shinichi, Utsunomiya City, Tochigi Prefecture (JP)
(74) Representative: Szary, Anne Catherine

(57) **Abstract**

A resin composition containing :
(A) a polycarbonate resin having double bonds, or 1-99 parts by weight of this polycarbonate resin and
(B) 99-1 parts by weight of a vinyl copolymer such as ABS resin or SAN resin, and a method for preparing delustered resin compositions whereby a total of 100 parts by weight of (A) and (B) is melt kneaded in the presence of 0.005-1.0 part by weight of (C) a radical initiator are disclosed from which delustered molded products having an outstanding appearance can be obtained.

## Description

The present invention relates to polycarbonate (PC) resin compositions for obtaining delustered molded products, and to a method for preparing delustered PC resin compositions. More specifically, it relates to PC resin compositions for obtaining delustered molded products, which compositions contain vinyl copolymers such as ABS resin, and also to a method for preparing the same.

Resin compositions obtained by blending a vinyl copolymer such as an ABS resin into a polycarbonate resin are known to be materials having an excellent impact resistance and heat distortion resistance. In the area of automotive interior trim components and light electrical components, there is a strong demand for products that keep in check the luster of component surfaces so as to achieve a sense of reserve and high quality, and also to assure safety by suppressing the reflection of light. Examples of methods for suppressing luster and obtaining delustered components that have hitherto been adopted include methods that involve modification of the mold surface or the application of delustering paint, and methods whereby inorganic substances and rubber components are formulated into the resin.

However, sufficient results have yet to be obtained with these methods. When the mold surface is modified, repair and maintenance of the mold is difficult, the glossy state varies depending on the molding conditions, and it is difficult to obtain molded pieces having a uniform gloss. When inorganic substances are formulated, the decrease in impact resistance is large; when rubber substances are formulated, the heat distortion resistance and rigidity decrease, in addition to which flow marks and weld lines readily form, making it difficult to obtain molded pieces having an excellent appearance.

Hence, the object of this invention is to provide polycarbonate resin compositions containing vinyl copolymers, and a delustered resin composition preparation method that gives delustered molded products having an excellent appearance.

The inventors conducted intensive studies aimed at improving the appearance of resin compositions containing a polycarbonate resin and a vinyl copolymer such as ABS resin. As a result of these studies, it was found that, when resin compositions containing both a polycarbonate resin that includes a specific component and a vinyl copolymer are melt-kneaded in the presence of a radical initiator, these can be used as materials for molded products having a delustered appearance, in addition to which they also have excellent mechanical properties. This discovery ultimately led to the present invention.

That is, the present invention provides a resin composition which includes:
(A) a polycarbonate resin containing, as a copolymeric constituent or an end-group sealer, a compound having:
   (a) a carbon-carbon double bond, and
   (b) at least one group selected from among -C(=O)-Cl, -C (=O)-Br, -C(=O)-OH, -OH, -O-C(=O)-Cl and -O-C(=O)-Br;
      or 1-99 parts by weight of this polycarbonate resin, and
(B)99-1 parts by weight of:
   (b-1) a copolymer containing as the copolymer constituent components (a) a rubber-based polymer, (b) an aromatic vinyl monomer component, and (c) a vinyl cyanide monomer and/or an α,β-unsaturated carboxylic acid or a derivative thereof, and/or
   (b-2) a copolymer containing as the constituent components (b) an aromatic vinyl monomer component, and (c) a vinyl cyanide monomer and/or an α,β-unsaturated carboxylic acid or a derivative thereof.

   The present invention also provides a method for the preparation of delustered resin compositions, which method is characterized by melt kneading 100 parts by weight of the resin composition cited in claim 1 in the presence of:
(C) 0.005-1.0 part by weight of a radical initiator.

The polycarbonate resins used in this invention include not only aromatic polycarbonates known to the prior art, but also copolyester carbonates.

Polycarbonates include a carbonate component and a biphenol component. Examples that may be cited of precursors for introducing the carbonate component include phosgene and diphenyl carbonate. Suitable diphenols include monocyclic and polycyclic diphenols which may have a heteroatom, are inert under polycarbonate production conditions, and have substituents which are inert to the influence of electromagnetic waves. Examples that may be cited include hydroquinone, resorcinol, dihydroxydiphenol, bis(hydroxyphenyl)alkanes, bis(hydroxyphenyl)cycloalkanes, bis(hydroxyphenyl)sulfides, bis(hydroxyphenyl)ethers, bis(hydroxyphenyl)ketones, bis(hydroxyphenyl)sulfoxides, bis(hydroxyphenyl)sulfones, and α,α'-bis(hydroxyphenyl)diisopropylbenzene, as well as ring-alkylated and ring-halogenated compounds thereof.

Suitable diphenols include the following: 4,4'-dihydroxydiphenol, 2,2-bis(4-hydroxyphenyl)propane (known as bisphenol A), 2,4'-bis(4-hydroxyphenyl)-2-methylbutane, 1,1-bis(4-hydroxyphenyl)cyclohexane, α,α'-bis(4-hydroxyphenyl)-p-diisopropylbenzene, 2,2-bis(3-methyl-4-hydroxyphenyl)propane, 2,2-bis(3-chloro-4-hydroxyphenyl)propane, bis(3,5-dimethyl-4-hydroxyphenyl)methane, 2,2-bis-(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)cyclohexane, α,α'-bis(3,5-dimethyl-4-hydroxyphenyl)-p-diisopropylbenzene, 2,2-bis(3,5-dichloro-4-hydroxyphenyl)propane, 2,2-bis(3,5-dibromo-4-hydroxyphenyl)propane.

Examples of diphenols that are especially desirable are 2,2-bis(4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, and 1,1-bis(4-hydroxyphenyl)cyclohexane. Any desirable combination of the above diphenols can also be used.

In addition to the above-mentioned monomer diphenol, it is also possible to additionally use oligomers or polymers having two end groups capable of undergoing polymerization reactions under the polycarbonate synthesis conditions. Examples of such end groups include phenolic OH groups, chlorocarbonate groups and carboxylic acid chloride groups. Examples of oligomer- or polymer-type blocks prepared beforehand that either already have such reactive groups or are capable of forming such groups by means of suitable post-treatment include polysiloxanes; polycondensates composed of aliphatic diols and saturated aliphatic or aromatic dicarboxylic acids, such as saturated aliphatic polyesters composed of hydrogenated dimeric fatty acids; aromatic polyether sulfones, and aliphatic polyethers.

To improve the flowability, additional use by a known means can also be made of a small amount, preferably 0.05-2.0 mol% (with respect to the number of moles of biphenol used), of a compound having a functionality of 3 or more [functional groups], and in particular a compound having three or more phenolic hydroxy groups.

Compounds having three or more phenolic hydroxyls that can be used include the following: 1,3,5-tri(4-hydroxyphenyl)benzene, 1,1,1-tri(4-hydroxyphenyl)ethane, 2,6-bis(2-hydroxy-5-methylbenzyl)-4-methylphenol, 2-(4-hydroxyphenyl)-2-(2,4-dihydroxyphenyl)-o-terephthalate, tetra(4-hydroxyphenyl)propane, hexa(4-(2-(4-hydroxyphenyl)prop-2-yl)phenyl)-o-terephthalate, tetra(4-hydroxyphenyl)methane and 1,4-bis(4',4'-dihydroxytriphenyl)methyl)benzene. Several other trifunctional compounds that may be cited are 2,4-dihydroxybenzoic acid, trimesic acid, cyanuric acid chloride and 3,3-bis(4-hydroxy-3-methylphenyl)-2-oxo-2,3-dihydro-indole.

The copolyester carbonate should preferably be one containing constituent units having formulas 1 and 2 below: 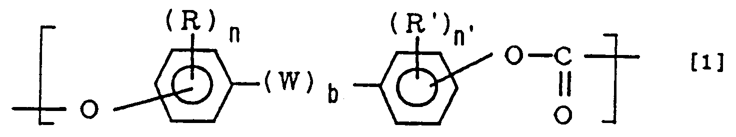 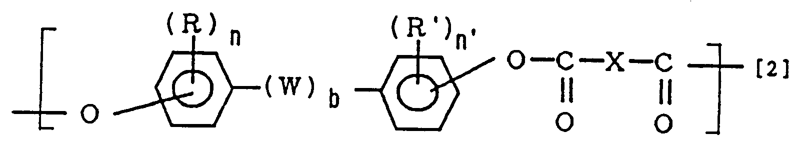
where R and R' are each independently halogen atoms, monovalent hydrocarbon groups or hydrocarbonoxy groups; W is a divalent hydrocarbon group, -S-, -S-S-, -O-, -S(=O)-, -(O=)S(=O)- or -C(=O)-; n and n' are each independently integers from 0 to 4; X is a divalent aliphatic group having 6-18 carbons; and b is 0 or 1; and where the amount of constituent units having formula 2 accounts for 2-30 mol% of the total amount of the constituent units having formulas 1 and 2. Examples of monovalent hydrocarbon groups that may be cited include alkyl groups having, 1-12 carbons such as methyl, ethyl, propyl and decyl groups; cycloalkyl groups having 4-8 carbons such as cyclopentyl and cyclohexyl groups; aryl groups having 6-12 carbons such as phenyl, naphthyl and biphenyl groups; aralkyl groups having 7-14 carbons such as benzyl and cinnamyl groups; and alkaryl groups having 7-14 carbons such as tolyl and cumenyl groups. Of these, the use of alkyl groups is preferable. Examples that may cited of the hydrocarbon group in the hydrocarbonoxy groups include the above-cited hydrocarbon groups. Preferable examples of hydrocarbonoxy groups such as this include alkoxy groups, cycloalkyloxy groups, aryloxy groups, aralkyloxy groups and alkaryloxy groups, with the use of alkoxy groups and aryloxy groups being preferable. In cases where X is a divalent hydrocarbon group, this may be an alkylene group having 1-30 carbons such as methylene, ethylene, trimethylene and octamethylene groups; alkylidene groups having 2-30 carbons such as ethylidene and propylidene groups; cycloalkylene groups having 6-16 carbons, such as cyclohexylene and cyclododecylene groups; or cycloalkylidene groups such as a cyclohexylidene group.

The constituent units represented by above formula 2 consist of a diphenol component and a divalent acid component. A diphenol like those cited above can be used to introduce the diphenol component. The monomer used to introduce the divalent acid component is a divalent acid or an equivalent substance. Examples of divalent acids include aliphatic diacids having 8-20 carbons, and preferably 10-12 carbons. These divalent acids or their equivalent substances may be straight-chain, branched or cyclic. The aliphatic diacids should preferably be α,ω-dicarboxylic acids. Preferable examples of divalent acids such as these include straight-chain saturated aliphatic dicarboxylic acids such as sebacic acid (decanedioic acid), dodecanedioic acid, tetradecanedioic acid, octadecanedioic acid and eicosanedioic acid; the use of sebacic acid and dodecanedioic acid is especially desirable. Examples of equivalent substances that may be cited include the acid chlorides and other acid halides of the above divalent acids, including aromatic esters such as diphenyl esters. Here, the number of carbons in the ester portion of the ester is not included in the number of carbons in the acid. The above-cited divalent acid or its equivalent substance may be used alone or as a combination of two or more thereof.

The above copolyester polycarbonate has the two above constituent units indicated by formulas 1 and 2 in the following proportions. That is, the amount of the constituent unit represented by formula 2 is 2-30 mol%, preferably 5-25 mol%, and most preferably 7-20 mol%, based on the total amount of the units represented by formulas 1 and 2.

The weight-average molecular weight of polyester carbonate is generally 10,000-100,000, and preferably 18,000-40,000. The weight-average molecular weight referred to here is measured by gel permeation chromatography using polystyrene corrected for polycarbonate use. The intrinsic viscosity measured at 25° C in methylene chloride should be 0.35-0.65 dL/g.

The above-described copolyester carbonate can be prepared by a known polycarbonate production method, such as an interfacial polymerization process using phosgene or a melt polymerization process. For example, preparation can be carried out by the methods cited in U.S. Pat. No. 4,238,596 (granted to Quinn), and U.S. Pat. No. 4,238,597 (Quinn and Markezich). More specifically, prior to the reaction of the ester-forming group and diphenol, an acid halide is formed, following which this is reacted with phosgene. In Goldberg's basic solution process (U.S. Patent No. 3,169,121), a pyridine solvent can be used or a dicarboxylic acid can be employed. It is also possible to make use of a melt polymerization process that employs an α,ω-dicarboxylic acid (e.g., sebacic acid) diester (e.g., the diphenyl ester). A preferable production method is the Kochanowski improved process described in U.S. Pat. 4,286,083. In this method, a lower diacid such as adipic acid is first rendered into the form of a salt (preferably an alkali metal salt such as the sodium salt), then is added to a reaction vessel containing the diphenol. In the reaction with phosgene, the aqueous phase is held at an alkaline pH, and preferably a pH of approximately 8-9, following which it is raised to a pH of 10-11 when a minimum of about 5% of the reaction with phosgene remains.

In cases where the interfacial polymerization method is based on a bischloroformate method, for example, it is preferable to make use of a catalyst system commonly used in the synthesis of polycarbonate or copolyester carbonate. Examples that may be cited of the main catalyst system include amines such as tertiary amines, amidine and guanidine. Tertiary amines are generally used; of these, a trialkylamine such as triethylamine is especially desirable.

In the above-mentioned polycarbonate resins, examples of end-group sealers for modifying molecular weight that can be used include phenol, p-t-butylphenol, isononylphenol, isooctylphenol, m- or p-cumylphenol (preferably p-cumylphenol) and chromanyl compounds.

A polycarbonate containing, either as a copolymeric constituent or an end-group sealer, a compound having:
(a) a carbon-carbon double bond, and
(b) at least one group selected from among -C(=O)-Cl, -C(=O)-Br, -C(=O)-OH, -OH, -O-C(=O)-Cl and -O-C(=O)-Br (that is, a polycarbonate resin containing carbon-carbon double bonds within the structure) is used in the above-described polycarbonate resin according to the present invention. A polycarbonate having double bonds at the ends of the molecule and in which the ends have been sealed by this type of compound is especially preferable. Polycarbonate resins with double bonds such as this can be obtained by having the above-described compound present when the carbonate component precursor and diphenol are polymerized. Examples that may be cited of these compounds include unsaturated aliphatic monocarboxylic acids such as acrylic acid, methacrylic acid, crotonic acid, oleic acid and linoleic acid, as well as maleimide benzoic acid, and their acid halides; unsaturated dicarboxylic acids such as maleic acid, fumaric acid and itaconic acid, as well as their acid halides; and isopropenyl phenol, allyl phenol, maleimide phenol, and their halogenocarbonates. These may be used alone or as mixtures thereof. In order to produce a polycarbonate in which the above-described compound has been copolymerized on the ends of the molecule, of the above-mentioned compounds, it is preferable to use an unsaturated aliphatic monocarboxylic acid, maleimide benzoic acid, or their acid halides; or isopropenyl phenol, allyl phenol, maleimide phenol, or their halogenocarbonates.

The compound serving as the copolymerization ingredient or the end-group sealer is normally added in an amount of 0.001-0.2 mole, and preferably 0.002-0.1 mole, per mole of the diphenol starting material.

Component (A) in the present invention may consist of just the above-described polycarbonate resin having double bonds, or it may consist of both this and the (unmodified) polycarbonate resin of the prior art. The range in the compounding ratio of these two ingredients is 0-99.5 parts by weight of the prior-art polycarbonate resin to 0.5-100 parts by weight of the polycarbonate resin having double bonds at the end. Preferably, this range is 80-90 parts by weight of the prior-art polycarbonate resin to 1-20 parts by weight of the polycarbonate resin having double bonds at the end.

Component (B) consists of (b-1) and/or (b-2). Here, (b-1) is a copolymer containing (a) a rubber polymer, (b) an aromatic vinyl monomer component, and (c) a vinyl cyanide monomer and/or an α,β-unsaturated carboxylic acid or a derivative thereof.

Examples of the rubber polymer (a) used in this invention include diene rubbers such as polybutadiene, polyisoprene, styrene-butadiene random copolymers and block copolymers, the hydrogenates of these block copolymers, acrylonitrile-butadiene copolymers and butadiene-isoprene copolymers, ethylene-propylene random copolymers and block copolymers, ethylene-butene random copolymers and block copolymers, copolymers of ethylene and α-olefin, ethylene-unsaturated carboxylate copolymers such as ethylene-methacrylate and ethylene-butyl acrylate, acrylate-butadiene copolymers, acrylic elastic polymers such as butyl acrylate-butadiene copolymers, copolymers of ethylene and vinyl aliphatic acid esters such as ethylene-vinyl acetate, ethylene-propylene-ethylidene-norbornene copolymers, ethylene-propylene non-conjugated diene terpolymers such as ethylene-propylene-hexadiene copolymers, butylene-isoprene copolymers and chlorinated polyethylene. One or more of these may be used. Preferable rubber polymers include ethylene-propylene rubber, ethylene-propylene non-conjugated diene terpolymers, diene rubber and acrylic elastic polymers. The use of polybutadiene and styrene-butadiene copolymer is especially desirable. The styrene content in this styrene-butadiene copolymer should preferably be 50 wt% or less.

Examples that can be cited of the aromatic vinyl monomer component (b) used in this invention include styrene, α-methylstyrene, o-, m- or p-methylstyrene, vinylxylene, monochlorostyrene, dichlorostyrene, monobromostyrene, dibromostyrene, fluorostyrene, p-tert-butylstyrene, ethylstyrene and vinylnaphthalene; one or more of these can be used. It is preferable for this to be styrene or α-methylstyrene.

Examples that may be cited of the vinyl cyanide monomer component in (c) used in the present invention include acrylonitrile and methacrylonitrile; one or more of these may be used.

Examples that may be cited of α,β-unsaturated carboxylic acids or their derivatives include α,β-unsaturated carboxylic acids such as acrylic acid and methacrylic acid; α,β-unsaturated carboxylates such as methyl (meth)acrylate, ethyl (meth)acrylate, propyl (meth)acrylate, butyl (meth)acrylate, 2-ethyl (meth)acrylate, 2-ethylhexyl methacrylate; α,β-unsaturated dicarboxylic anhydrides such as maleic anhydride and itaconic anhydride; the imide compounds of α,β-unsaturated dicarboxylic acids such as maleimide, N-methyl maleimide, N-ethyl maleimide, N-phenyl maleimide and N-o-chlorophenyl maleimide. One or more of these monomers may be used.

Component (c) above may be the above-mentioned vinyl cyanide monomer component and/or α,β-unsaturated carboxylic acids or derivatives thereof.

In component (b-1), there is no particular restriction on the ratio of components (a), (b) and (c), these components being formulated according to the intended application.

The copolymer serving as component (b-1) is preferably a graft copolymer obtained by the graft copolymerization of the other component in the presence of the rubber polymer (a); it is most preferably an ABS resin (acrylonitrile-butadiene-styrene copolymer), an AES resin (acrylonitrile-ethylene-propylene-styrene copolymer), an ACS resin (acrylonitrile-chlorinated polyethylene-styrene copolymer), an AAS resin (acrylonitrile-acrylic elastic polymer-styrene copolymer), or an MBS resin (methyl methacrylate-butadiene-styrene copolymer).

There is no particular restriction on the method of producing the copolymer serving as component (b-1), it being possible to use a conventional known process such as bulk polymerization, solution polymerization, bulk suspension polymerization, suspension polymerization, or emulsion suspension. It is also possible to obtain component (b-1) by blending the separately copolymerized resins.

Next, (b-2) in component (B) is a copolymer that includes (b) an aromatic vinyl monomer component and (c) a vinyl cyanide monomer and/or an α,β-unsaturated carboxylic acid or a derivative thereof. Examples that may be cited include the compounds mentioned as (b) and (c) in component (b-1) above. There is no particular restriction on the component ratio, this being selected in accordance with the intended application. The use of an SAN resin (styrene-acrylonitrile copolymer) as (b-2) is preferable. The same methods as those cited above for (b-1) can be used to produce the copolymer in component (b-2).

Component (B) should preferably be a blend of the copolymer in (b-2) and a graft copolymer obtained by the graft copolymerization of the other components in the presence of the rubber polymer (a).

The compounding ratio of above components (A) and (B) is 99-1 parts by weight of (B) per 1-99 parts by weight of (A), and preferably 90-5 parts by weight of (B) per 10-95 parts by weight of (A).

Examples that may be cited of the radical initiator serving as component (C) used in this invention include aromatic peroxides such as cumene hydroperoxide, diisopropyl benzene hydroperoxide, t-butyl hydroperoxide, p-menthane hydroperoxide and di-t-butyl hydroperoxide, and azobisisobutyronitrile. These may be used alone or as mixtures of two or more.

Component (C) is compounded in an amount of 0.005-1.0 part by weight, and preferably 0.01-0.3 part by weight, per 100 parts by weight of the overall amount of components (A) and (B). When the amount of (C) is less than 0.005 part by weight, it is inadequate to obtain a low-gloss resin composition. The use of more than 1.0 part by weight invites deterioration of the resin.

A delustered resin composition can be obtained by melt kneading the above-described resin composition containing (A) and (B) in the presence of the radical initiator (C).

In addition to the above components, conventional additives may be added to the resin compositions of the present invention during mixing or molding of the resin in accordance with the desired aim, provided these do not compromise the properties of the composition. Examples of such additives include pigments, dyes, reinforcing agents (e.g., glass fibers, carbon fibers), fillers (e.g., carbon black, silica, titanium oxide), heat-resisting agents, antioxidants, anti-weathering agents, lubricants, parting agents, crystal nucleating agents, plasticizers, flow enhancers, flame retardants, flame-retarding aids and antistatic agents.

There is no particular restriction on the method employed for preparing the resin compositions of the present invention, it being possible to use a conventional method with satisfactory effects. It is desirable, however, to make use of a conventional melt mixing method. The use of a small amount of solvent is also possible, but is generally not necessary. As for the apparatus, particular mention can be made of extruders. Banbury-type mixers, rollers and kneaders; these may be operated in a batch-vise or continuous manner. There is no particular restriction on the order in which the ingredients are mixed.

### Example

The present invention shall now be illustrated more concretely through the examples given below. It should be understood, however, that these examples in no way limit the scope of the invention.

The following compounds were used in the examples.

### Component (A)

PC-1: A polycarbonate having an intrinsic viscosity (as measured at 25° C in methylene chloride) of 0.50 dL/g (General Electric Co.).
PC-2: A polycarbonate having double bonds at the ends of the molecules, and produced in the following manner. First, 2.28 kg (10 moles) of 2,2-bis-(4-hydroxyphenyl)propane (i.e., bisphenol A), 75.6 kg (0.4 mole) of N-(p-hydroxyphenyl)maleimide, and 14 mL of triethylamine were added to a mixture of 6 liters of ion-exchanged water and 7 liters of methylene chloride, then the entire mixture was mixed vigorously at room temperature. Next, a 50% aqueous solution of sodium hydroxide was added and, while holding the solution pH at 10, phosgene was blown into this solution mixture at a rate of 60 g/min for 20 minutes. After the completion of phosgene addition, stirring was carried out for 5 days, following which the methylene chloride solution and the aqueous water were separated. This methylene chloride solution was washed first with water, then 2% hydrochloric acid, then water once again, after which the solvent was removed and the remaining product was dried overnight at 100° C.

The resulting product was submitted to IR analysis, and ν_{c=O} absorption vas observed at 1704 cm⁻¹. From H¹NMR measurements, a peak corresponding to a hydrogen atom linked to the double-bond carbon in maleimide was noted at δ6.85. From molecular-weight measurements by GPC, the number-average molecular weight of this product was found to be 11,300, and the weight-average molecular weight was 28,100.

### Component (B): ABS resin: UX050 (trade name; "Ubesaicon"* Co.) SAN resin: SR30B (trade name; "Ubesaicon" Co.)

### Component (C):

Cumene hydroperoxide

### Example 1

Sixty parts by weight of PC-1, 5 parts by weight of PC-2, 20 parts by weight of SAN resin and 10 parts by weight of ABS resin were mixed, extruded in a twin-screw extruder (30 mm) set at a barrel temperature of 260° C and a screw rotational speed of 400 rpm, and pellets fabricated. These pellets were dried for 4 hours at 100° C, then injection molded at a cylinder temperature of 260° C and a mold temperature of 80° C, thereby giving test pieces. The Izod impact strength and gloss of these test pieces were measured; the Izod impact strength was 63 kg-cm/cm and the gloss was 85%.

The Izod impact strength was determined by measuring the 1/8-inch bar notched Izod impact strength according to ASTM D256. The gloss was measured at an incident angle of 60° and at a reflection angle of 60° using a glossmeter (model GM-261, made by Murakami Shikisai Gijutsu Kenkyujo).

### Example 2

An amount of 0.1 part by weight of cumene peroxide was added to the pellets produced in Example 1, following which extrusion was carried out once again under the same conditions as in Example 1, and pellets were fabricated. These pellets were dried for 4 hours at 100° C, then injection molded under the same conditions as in Example 1, thereby giving test pieces. The Izod impact strength and gloss of these test pieces were measured. The results are indicated in Table 1.

### Examples 3-4, and Comparative Examples 1-2

The components were mixed in the proportions (weight ratios) shown in Table 1, extruded under the same conditions as in Example 1, and pellets formed. These pellets were then dried and injection molded under the same conditions as in Example 1, giving test pieces. The Izod impact strength and gloss for these were measured. The results are indicated in Table 1.

**Table 1**

| | Examples | | | Comparative Examples | |
|---|---|---|---|---|---|
| | 2 | 3 | 4 | 1 | 2 |
| Ingredients (parts by weight): | | | | | |
| PC-1 | 60 | 63 | 55 | 65 | 65 |
| PC-2 | 5 | 2 | 10 | -- | -- |
| SAN resin | 20 | 20 | 20 | 20 | 20 |
| ABS resin | 10 | 10 | 10 | 10 | 10 |
| Cumene hydroperoxide | 0.1 | 0.1 | 0.1 | -- | 0.1 |
| Evaluation tests | | | | | |
| Gloss (60°-60°) | 33 | 50 | 17 | 96 | 89 |
| Izod impact strength (kg-cm/cm) | 66 | 68 | 67 | 62 | 69 |

### Example 5

Ninety parts by weight of PC-1, 5 parts by weight of PC-2, and 5 parts by weight of ABS resin were mixed, extruded in a twin-screw extruder set at a barrel temperature of 290° C and a screw rotational speed of 400 rpm, and pellets formed. These pellets were dried for 4 hours at 100° C, then injection molded at a cylinder temperature of 270° C and a mold temperature of 80° C, thereby giving test pieces. The Izod impact strength and gloss were measured, whereupon the Izod impact strength was found to be 79 kg-cm/cm and the gloss was 99%.

### Example 6

An amount of 0.1 part by weight of cumene peroxide was added to the pellets produced in Example 5, then these were again extruded under the same conditions as in Example 5, thereby giving new pellets. These pellets were dried for 4 hours at 100° C, then injection molded under the same conditions as in Example 5, thereby giving test pieces. The Izod impact strength and gloss were measured. Those results are given in Table 2.

### Examples 7-8 and Comparative Examples 3-4

The various components were mixed in the proportions indicated in Table 2 (weight ratio), extrusion was carried out under the same conditions as in example 5, and pellets were fabricated. After subsequent drying, injection molding was carried out under the same conditions as in Example 5, thereby giving test pieces. The Izod impact strength and gloss were measured. Those results are given in Table 2.

**Table 2**

| | Examples | | | Comparative Examples | |
|---|---|---|---|---|---|
| | 6 | 7 | 8 | 3 | 4 |
| Ingredients (parts by weight): | | | | | |
| PC-1 | 90 | 93 | 85 | 95 | 95 |
| PC-2 | 5 | 2 | 10 | -- | -- |
| ABS resin | 5 | 5 | 5 | 5 | 5 |
| Cumene hydroperoxide | 0.1 | 0.1 | 0.1 | -- | 0.1 |
| Evaluation tests | | | | | |
| Gloss (60°-60°) | 41 | 63 | 38 | 98 | 97 |
| Izod impact strength (kg-cm/cm) | 76 | 79 | 78 | 78 | 77 |

Because the molded pieces obtained from the resin compositions of the present invention have a delustered surface appearance and excellent mechanical properties, they have broad applications and are industrially useful.

## Claims

**(1)** A resin composition which includes:
(A) a polycarbonate resin containing, as a copolymeric constituent or an end-group sealer, a compound having:
(a) a carbon-carbon double bond, and
(b) at least one group selected from among -C(=O)-Cl, -C(=O)-Br, -C(=O)-OH, -OH, -O-C(=O)-Cl and -O-C(=O)-Br;
or 1-99 parts by weight of this polycarbonate resin, and
(B)99-1 parts by weight of:
(b-1) a copolymer containing as the copolymer constituent components (a) a rubber-based polymer, (b) an aromatic vinyl monomer component, and (c) a vinyl cyanide monomer and/or an α,β-unsaturated carboxylic acid or a derivative thereof, and/or
(b-2) a copolymer containing as the constituent components (b) an aromatic vinyl monomer component, and (c) a vinyl cyanide monomer and/or an α,β-unsaturated carboxylic acid or a derivative thereof.

**(2)** A method for the preparation of delustered resin compositions, which method is characterized by melt kneading 100 parts by weight of the resin composition cited in claim 1 in the presence of:
(C) 0.005-1.0 part by weight of a radical initiator.
